# EUROPEAN PATENT APPLICATION

(11) **EP 4 266 291 A1**
(43) Date of publication of application: **25.10.2023**
(21) Application number: 23168871.4
(22) Date of filing: 20.04.2023
(51) Int. Cl.: G09B 23/30

(54) **REGENERATIVE ARTIFICIAL TISSUE FOR ELECTROSURGICAL ROBOTIC ASSISTED SURGERY TRAINING AND TESTING**

(30) Priority: 22.04.2022 US 202263333674 P; 17.08.2022 US 202263398668 P; 30.03.2023 US 202318128709
(71) Applicant: Covidien LP, Mansfield, MA 02048 (US)
(72) Inventor: GETTENS, Robert T.T., Longmeadow, 01106 (US); SPOONER, Anthony W., West Bridgewater, 02379 (US); CICHON, Anna N., Ludlow, 01056 (US); KLISIEWICZ, Julia D., Whitinsville, 01588 (US); ALENCKIS, Adam R., Oakville, 06779 (US); LEU, Brittney J., North Haven, 06473 (US); VARSHNEY, Manasvi, North Haven, 06473 (US)
(74) Representative: Maschio, Antonio

(57) **Abstract**

An anatomical model includes an artificial organ frame and an artificial tissue. The artificial organ frame includes a hollow body defining a cavity therein and includes windows defined through the hollow body. The artificial tissue is disposed within the cavity of the hollow body and is accessible through the windows of the hollow body. The hollow body of the artificial organ frame is shaped like a human organ and the artificial tissue has mechanical and electrical properties that mimic the human organ.

## Description

### CROSS-REFERENCE TO RELATED APPLICATIONS

The present application claims the benefit of and priority to each of U.S. Provisional Patent Application Serial No. 63/398,668, filed on August 17, 2022, and U.S. Provisional Patent Application Serial No. 63/333,674, filed on April 22, 2022, the entire contents of each of which being incorporated herein by reference.

### FIELD

This disclosure relates to surgical devices. More specifically, this disclosure relates to an anatomically correct surgical training and/or testing model that includes artificial tissue for practicing surgical tasks, such as electrosurgery, in a clinically relevant manner.

### BACKGROUND

Robotic Assisted Surgery (RAS) may be used to perform surgeries with a great degree of control, flexibility, and precision. A robotic surgical system may include an arm supporting a camera and additional arms that each include a surgical instrument, for instance. The arms of the robotic surgical system may be controlled by a surgeon using a console to perform various surgical tasks, such as minimally invasive surgical procedures.

Artificial tissue slabs or ex-vivo tissue may be used to practice performing surgical tasks or using surgical instruments and/or surgical systems, such as a robotic surgical system, and/or to test surgical techniques, surgical instruments, and/or surgical systems during, for example, research and development. Artificial slabs, however, lack anatomical shape and are not designed to be reusable, and ex-vivo tissue is expensive, hard to preserve, biohazardous, and is not reusable.

### SUMMARY

This disclosure describes surgical training and testing systems, surgical training and testing models, and methods of using and making the same. The surgical training and testing models may be utilized to practice performing surgical tasks, to practice using surgical instruments and/or surgical systems, and to evaluate surgical techniques, surgical instruments, and/or surgical systems prior to use in a clinical setting.

The surgical training and testing models of this disclosure include artificial tissue that mimics real tissue and allows a user to simulate surgical tasks and procedures. The surgical training and testing models include one or more of the following advantages over conventionally used surgical training and testing materials: anatomical correctness to resemble a specific organ; capability of performing multiple tasks (e.g., suturing, transection, stapling, etc.); compatibility with electro surgery; incorporation of fluid flow (e.g., to simulate blood flow); no foul smell or fumes; environmental friendliness; ethical; economical; reusable; resettable; safe to use; safe to manufacture; easy to manufacture (e.g., less time, less complex, etc.); clinically relevant; ease of use (e.g., transportable); and challenging to a user (e.g., not redundant).

In aspects, this disclosure provides an anatomical model including an artificial organ frame and an artificial tissue. The artificial organ frame includes a hollow body defining a cavity therein and includes windows defined through the hollow body. The artificial tissue is disposed within the cavity of the hollow body and is accessible through the windows of the hollow body. The hollow body is shaped like a human organ and the artificial tissue has mechanical and electrical properties that mimic the human organ.

In aspects, the hollow body of the artificial organ frame is shaped like a stomach.

The artificial organ frame may include a tubular section extending from the hollow body and defining a lumen therethrough. The lumen may be in open communication with the cavity of the hollow body. In some aspects, the tubular section includes fasteners extending from a terminal end of the tubular section. In some aspects, the anatomical model includes an artificial intestine connected to the tubular section of the artificial organ frame.

The artificial tissue may be a hydrogel. In some aspects, the artificial tissue is formed from polyvinyl alcohol and gellan gum. In certain aspects, the artificial tissue includes about 10-28% polyvinyl alcohol and about 1-4% gellan gum.

The anatomical model may further include an artificial blood assembly including an artificial blood reservoir containing artificial blood and at least one artificial blood vessel fluidly coupled to the artificial blood reservoir. In some aspects, the artificial blood reservoir is a pump and the at least one artificial blood vessel is a tube. In some aspects, the at least one artificial blood vessel is disposed within the artificial tissue.

The gastric training model may further include an artificial tumor having a hard body and a channel extending through the hard body. In some aspects, the artificial organ frame includes a peg extending from an inner surface of the hollow body, and the peg extends through the channel of the artificial tumor.

In aspects, this disclosure provides a surgical training and testing system including a surgical instrument, a training dome, and an anatomical model. The training dome includes ports, and each of the ports is configured to allow passage of a portion of the surgical instrument through the port and into a cavity of the training dome. The anatomical model is positioned within the cavity of the training dome. The anatomical model includes an artificial organ frame and an artificial tissue. The artificial organ frame includes a hollow body defining a cavity therein and includes windows defined through the hollow body. The artificial tissue is disposed within the cavity of the hollow body and is accessible through the windows of the hollow body. The hollow body is shaped like a human organ and the artificial tissue has mechanical and electrical properties that mimic the human organ.

The surgical instrument may be a robotic surgical instrument. In some aspects, a robotic surgical system includes the surgical training and testing system and a robotic arm operably coupled to the surgical instrument. The robotic surgical system may further include a control device and an operating console. The robotic arm may be connected to the control device and may be tele-operable by the operating console.

In aspects, this disclosure provides a method of making an anatomical model. The method includes: forming an artificial organ frame including a hollow body in the shape of a human organ, the hollow body defining a cavity therein and including windows defined through the hollow body; and forming an artificial tissue having mechanical and electrical properties that mimic the human organ.

In some aspects, forming the artificial tissue includes pouring a liquid solution of the artificial tissue into the cavity of the hollow body of the artificial organ frame and subjecting the artificial organ frame and the liquid solution of the artificial tissue to a freeze-thaw cycle to cure the artificial tissue within the artificial organ frame.

The method may further include forming at least one artificial blood vessel within the artificial tissue and fluidly connecting the at least one artificial blood vessel to an artificial blood reservoir containing artificial blood.

The details of one or more aspects of this disclosure are set forth in the accompanying drawings and the description below. Other aspects, as well as features, objects, and advantages of the aspects described in this disclosure will be apparent from the description and drawings, and from the claims.

### BRIEF DESCRIPTION OF DRAWINGS

Various aspects of this disclosure are described hereinbelow with reference to the drawings, which are incorporated in and constitute a part of this specification, wherein:
FIG. 1 is a perspective view of a surgical training and testing system in accordance with aspects of this disclosure, the surgical training and testing system including surgical instruments, a training dome, and an anatomical model;
FIG. 2 is a schematic illustration of a robotic surgical system in accordance with aspects of this disclosure, the robotic surgical system suitable for use with the surgical training and testing system of FIG. 1 and shown including the surgical instruments of FIG. 1;
FIG. 3 is a perspective view of the anatomical model of FIG. 1, the anatomical model including an artificial organ frame and an artificial tissue;
FIG. 4A is a perspective view of an optional base of the anatomical model of FIG. 3;
FIG. 4B is a perspective top view of the artificial organ frame of the anatomical model of FIG. 3;
FIG. 4C is a perspective view of the artificial tissue of the anatomical model of FIG. 3;
FIG. 5 is a perspective bottom view of an artificial organ frame of an anatomical model in accordance with other aspects of this disclosure;
FIG. 6A is a perspective bottom view of an artificial organ frame of an anatomical model in accordance with yet other aspects of this disclosure;
FIG. 6B is a perspective view of a training bead for use with the artificial organ frame of FIG. 6A in accordance with aspects of this disclosure;
FIG. 7 is a perspective view of a mold used to form the anatomical model of FIG. 3 in accordance with aspects of this disclosure;
FIG. 8 is a schematic illustration of an artificial blood assembly positioned in the artificial organ frame of FIG. 4B in accordance with aspects of this disclosure;
FIG. 9 is a schematic illustration of an anatomical model in accordance with other aspects of this disclosure; and
FIGS. 10A and 10B are perspective views of an anatomical model in accordance with yet other aspects of this disclosure.

### DETAILED DESCRIPTION

Aspects of this disclosure will now be described in detail with reference to the drawing figures wherein like reference numerals identify similar or identical elements. In this description, the terms "about," "generally," "substantially," and the like, shall be understood as words of approximation that take into account relatively little to no variation in the modified terms (e.g., generally accepted manufacturing, use, environmental, or measurement tolerances differing, for example, by less than 10%). It should be understood that various components of this disclosure, such as those numbered in the 100 series, correspond to components of the disclosure similarly numbered in the 200, 300, 400, 500, etc. series, such that redundant explanation of similar components need not be repeated herein.

It should be understood that the disclosed aspects are merely exemplary of the disclosure and may be embodied in various forms. Well-known functions or constructions are not described in detail to avoid obscuring the disclosure in unnecessary detail. Therefore, specific structural and functional details disclosed herein are not to be interpreted as limiting, but merely as a basis for the claims and as a representative basis for teaching one skilled in the art to variously employ the disclosure in virtually any appropriately detailed structure.

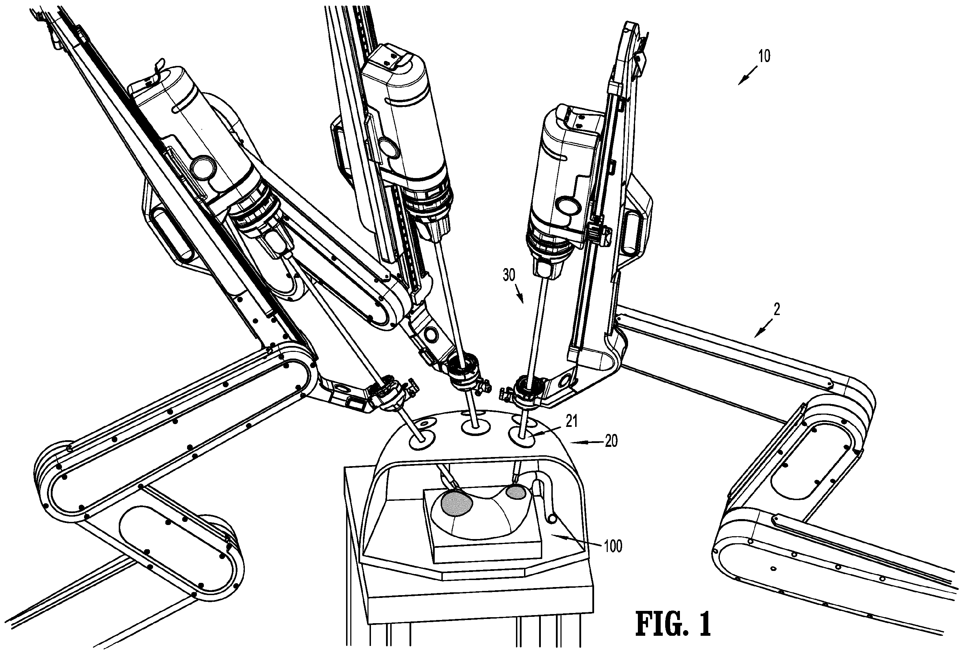

FIG. 1 illustrates a surgical training and testing system 10 including a training abdomen or dome 20, surgical instruments 30, and a training/testing device or anatomical model 100. The training dome 20 includes a plurality of ports or openings 21, which are configured to represent orifices (e.g., man-made orifices) in a patient. The anatomical model 100 is sized and shaped to fit within the training dome 20 and is configured to simulate a human organ. A user may utilize the surgical instruments 30, shown operably coupled to robotic arms 2, to practice performing surgical tasks through the openings 21 of the training dome 20 on the anatomical model 100.

While three surgical instruments 30 are shown, more or fewer surgical instruments 30 may be used in connection with the training dome 20 and the anatomical model 100, and the types of surgical instrument may vary depending upon the surgical tasks to be performed on the anatomical model. Further, while the surgical instruments 30 are shown as robotic surgical instruments, it should be understood that the surgical instruments may be non-robotic (e.g., handheld surgical instruments).

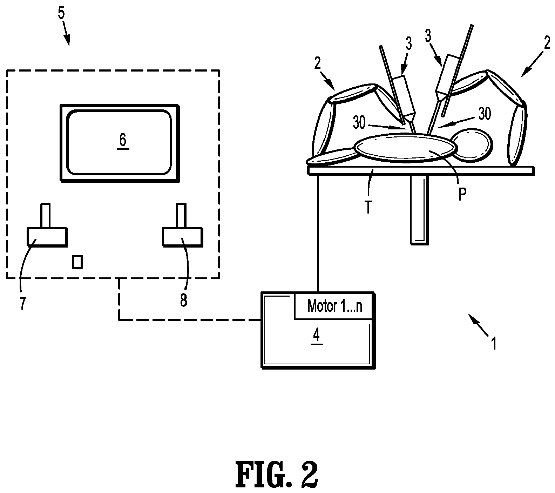

The surgical instruments 30 may be components of a robotic surgical system. FIG. 2 illustrates an exemplary robotic surgical system 1 that generally includes a plurality of robotic arms 2, with each of the robotic arms 2 having an instrument drive unit 3 and the surgical instrument 30 removably attached thereto, a control device 4, and an operating console 5 coupled with control device 4.

Each of the robotic arms 2 includes a plurality of members, which are connected through joints. The robotic arms 2 may be driven by electric drives (not shown) that are connected to the control device 4. The control device 4 (e.g., a computer) is set up to activate the electric drives, in particular by means of a computer program, in such a way that the robotic arms 2, the instrument drive units 3, and thus, the surgical instrument 30 execute a desired movement according to a movement defined by means of manual input devices 7, 8 of the operating console 5. The control device 4 may also be set up in such a way that it regulates the movement of the robotic arms 2 and/or of the electric drives.

The control device 4 may control a plurality of motors, e.g., "Motor 1 ... n," with each motor configured to drive movement of the robotic arms 2 in a plurality of directions. Further, the control device 4 may control the activation of the instrument drive unit 3 to drive various operations of the surgical instrument 30, and may control a rotation of an internal motor pack of the instrument drive unit 3 to ultimately rotate the surgical instrument 30 about a longitudinal axis thereof.

The operating console 5 includes a display device 6, which is set up in particular to display three-dimensional images, and the manual input devices 7, 8, by means of which a user (not shown), for example a surgeon, is able to telemanipulate or tele-operate the robotic arms 2 in a first operating mode, as known in principle to a person skilled in the art.

The robotic surgical system 1 is configured for use on a patient "P" lying on a patient table "T" to be treated in a minimally invasive manner by means of the surgical instruments 30. Accordingly, the robotic surgical system 1 may be configured for use with the training dome 20 and the anatomical model 100 of FIG. 1, to simulate use on a patient.

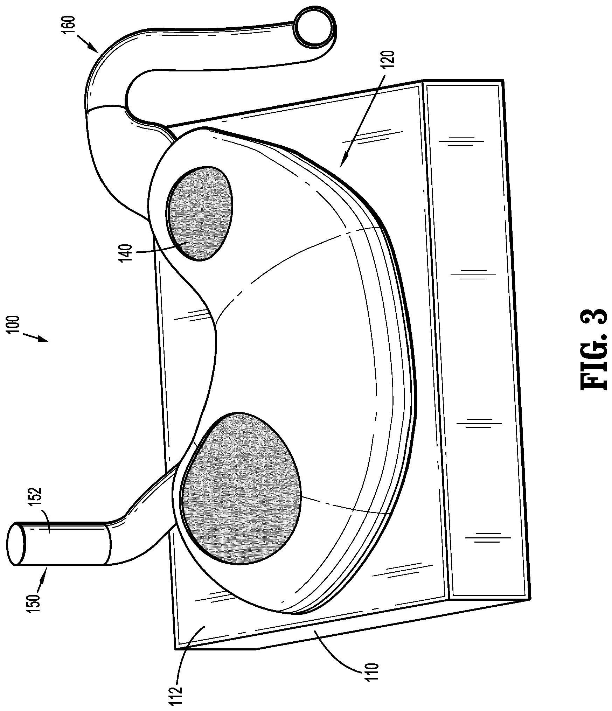

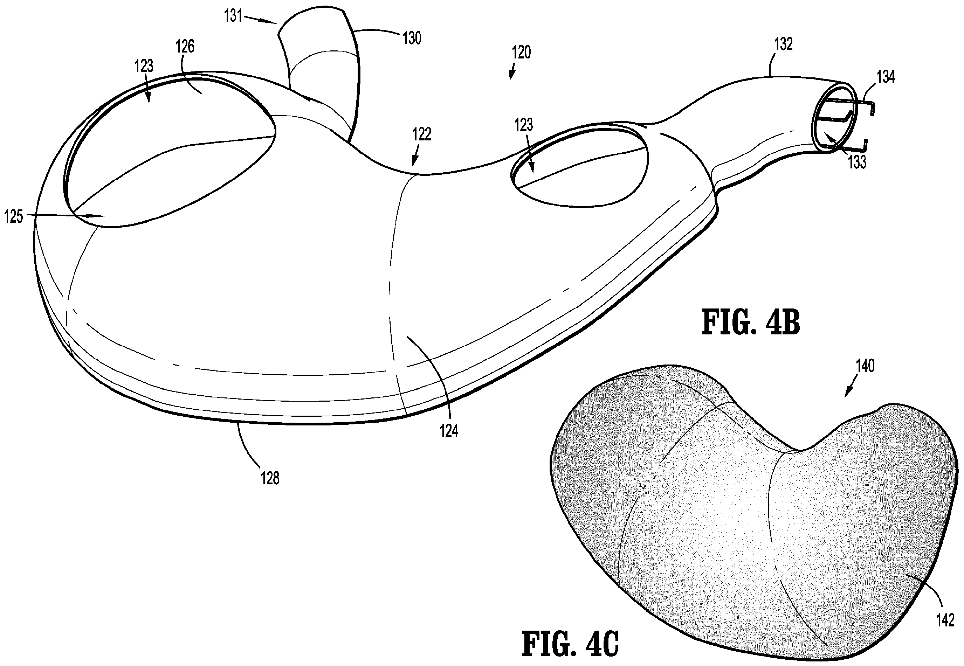

FIG. 3 illustrates the anatomical model 100. The anatomical model 100 includes an outer shell or artificial organ frame 120 and an inner substrate or artificial tissue 140 positionable within a cavity 125 (FIG. 4B) of the artificial organ frame 120. The artificial organ frame 120 is sized and shaped for anatomical correctness to mimic a stomach (i.e., a human stomach), and the artificial tissue 140 is configured to have the material properties of stomach tissue so that the anatomical model 100 reflects the organ itself. The anatomical model 100 may optionally include a base 110 detachably coupled to the artificial organ frame 120. The base 110 is configured to stably support the artificial organ frame 120 and the artificial tissue 140 thereon.

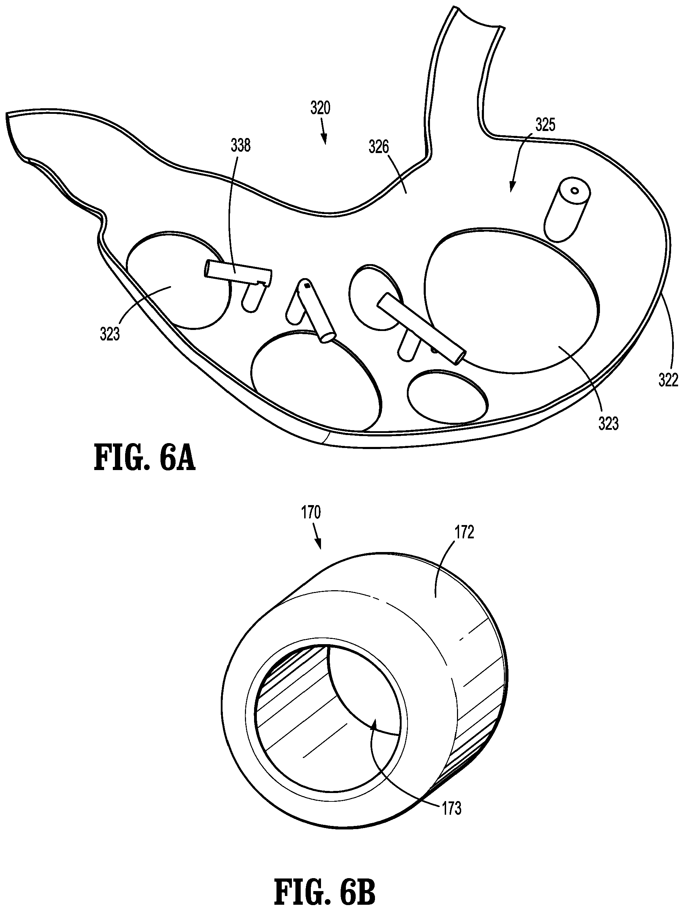

In some aspects, the anatomical model 100 further includes an artificial blood assembly 150, additional artificial organs, such as an artificial intestine 160, and/or artificial tumors 170 (FIG. 6B). Accordingly, various surgical tasks and procedures may be performed on the anatomical model 100, such as tissue cutting, grasping, suturing, anastomosis, sharp dissection, blunt dissection, monopolar cutting and coagulation, and bipolar coagulation.

While the anatomical model 100 is shown and described herein as a human stomach, it should be understood that other organs (e.g., heart, lungs, brain, kidney, spleen, pancreas, intestines, eyes, skin, etc.), vessels, glands, and/or other components of various human body organ systems, and combinations thereof, may be modeled, and the characteristics of the anatomical model may be configured to match those of that organ.

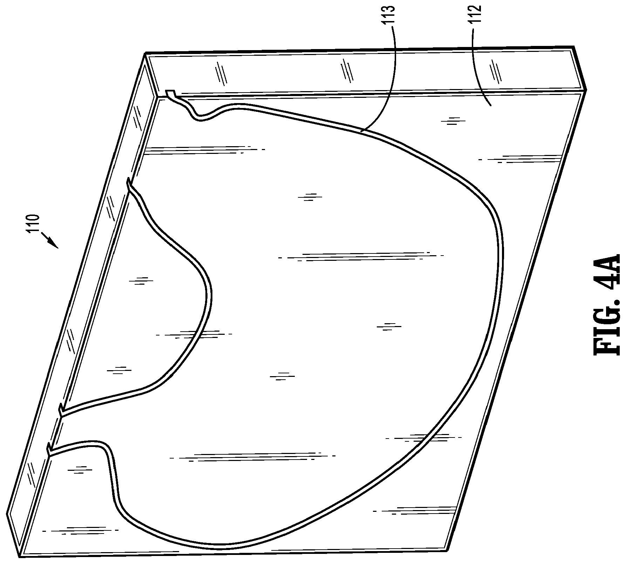

With reference to FIG. 4A, in conjunction with FIG. 3, the optional base 110 includes a support surface 112 on which the artificial organ frame 120 and the artificial tissue 140 is placed. In some aspects, the base 110 includes a groove 113 recessed in the support surface 112 for receiving an edge 128 (FIG. 4B) of the artificial organ frame 120 therein. The base 110 and the artificial organ frame 120 are separate and detachable relative to each other to introduce, remove, and/or reset the artificial tissue 140 therebetween. In aspects in which the anatomical model 100 does not include the base 110, the edge 128 of the artificial organ frame 120 may be configured to stably position the anatomical model 100 on a working surface (e.g., the edge may include a non-slip material or treatment).

With reference to FIG. 4B, in conjunction with FIG. 3, the artificial organ frame 120 includes a hollow body 122 contoured to mimic the shape of a stomach from an anterior view. The hollow body 122 has a generally convex shape and includes an outer surface 124, an inner surface 126 defining a cavity 125 in the hollow body 122, and an edge 128 interconnecting the outer and inner surfaces 124, 126. The edge 128 defines a J-shape outline of the simulated stomach and is positionable against the base 110 so that the cavity 125 of the artificial organ frame 120 extends between the inner surface 126 of the artificial organ frame 120 and the support surface 112 of the base 110.

The hollow body 122 further includes a plurality of openings or windows 123 defined therethrough. The windows 123 provide access into the cavity 125 of the hollow body 122 from outside of the anatomical model 100. Specifically, the windows 123 enables the artificial tissue 140 disposed within the cavity 125 of the hollow body 122 to be accessed by surgical instruments during a surgical task or procedure. Accordingly, the artificial organ frame 120 supports the artificial tissue 140 and is not configured for surgical tasks to be performed thereto. The number, size, and placement of the windows 123 through the hollow body 122 may vary depending upon, for example, the number of different tasks, access points, etc. desired from the anatomical model 100.

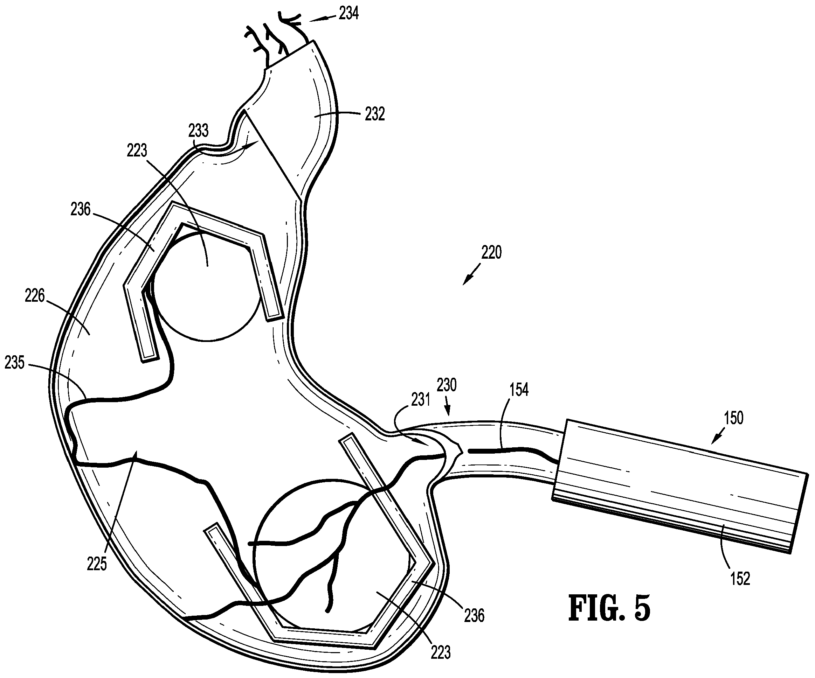

The artificial organ frame 120 may further includes a first tubular section 130 extending from the hollow body 122 that is sized, shaped, and positioned to mimic an end portion of an esophagus and a second tubular section 132 extending from the hollow body 122 that is sized, shaped, and positioned to mimic an end portion of an intestine. The first and second tubular sections 130, 132 respectively define first and second lumens 131, 133 therethrough. The first and second lumens 131 133 are in open communication with the cavity 125 of the hollow body 122 on one end and with the outside environment on the other end. The first tubular section 130 is configured for attachment to an artificial blood reservoir 152 (FIG. 3) of the artificial blood assembly 150, which may be coupled to the artificial organ frame 120 when blood simulation is desired. The second tubular section 132 is configured for attachment to the artificial intestine 160 (FIG. 3). The second tubular section 132 includes a plurality of fasteners 134 for connecting the artificial intestine 160 to the artificial organ frame 120. While the fasteners 134 are shown as hooks, it should be understood that the fasteners 134 may have other configurations for grasping or retaining the artificial intestine 160 to the artificial organ frame 120 as is within the purview of those skilled in the art, such as the fasteners 234 (FIG. 5) shown in the form of barbed sutures or wires, for example.

The artificial organ frame 120 is formed from a hard or rigid material (e.g., plastic) that maintains its shape and is reusable. In aspects, the artificial organ frame 120 is formed from a transparent resin polymer.

With reference to FIG. 4C, in conjunction with FIG. 3, the artificial tissue 140 includes a solid body 142 complementary in size and shape with the cavity 125 (FIG. 4B) of the hollow body 122 of the artificial organ frame 120. The artificial tissue 140 has mechanical properties (e.g., density, hardness, tensile strength, compressive strength, and elasticity) and electrical properties (e.g., conductivity, and resistance) that replicates stomach tissue. In aspects, the artificial tissue 140 is a hydrogel and, in certain aspects, the artificial tissue is a self-healing hydrogel. The artificial tissue 140 may be formed from gelatin (e.g., natural or synthetic, such as clear ballistics gel), alginate, gellan gum, polyvinyl alcohol, and mixtures thereof. The artificial tissue 140 may be formed from a composite of polyvinyl alcohol and gellan gum, such as those sold under the trademark GELLEX^{™} by Caisson Laboratories or PHYTAGEL^{™} by Sigma-Aldrich. In aspects, the artificial tissue 140 includes about 10-28% polyvinyl alcohol and about 1-4% gellan gum. In some aspects, the artificial tissue 140 includes about 28% polyvinyl alcohol and 4% gellan gum and, in some other aspects, the artificial tissue 140 includes about 15% polyvinyl alcohol and 2% gellan gum. In certain aspects, the artificial tissue 140 includes a dye to match the color of real tissue.

FIG. 5 illustrates an artificial organ frame 220 in accordance with other aspects of this disclosure. The artificial organ frame 220 is substantially similar to the artificial organ frame 120 and will be described with respect to the differences therebetween. The artificial organ frame 220 includes flanges 236 extending from the inner surface 226 of the artificial organ frame 220 and into the cavity 225 of the artificial organ frame 220. The flanges 236 extend at least partially around each of the windows 223 defined through the artificial organ frame 220. The flanges 236 are configured to support the artificial tissue 140 (FIG. 4C). In some aspects, the artificial tissue 140 is a plurality of solid bodies 142 individually retained in each of the windows 223 of the artificial organ frame 220 by the flanges 236.

The artificial organ frame 220 is shown coupled to an artificial blood assembly 150. The artificial blood assembly 150 is configured to generally match the viscosity and flow rate of real blood to simulate bleeding and coagulation. The artificial blood assembly 150 includes a fluid source or artificial blood reservoir 152 containing artificial blood (not explicitly shown) and at least one artificial blood vessel 154 extending from the artificial blood reservoir 152. In some aspects, the at least one artificial blood vessel 154 is a network of artificial veins and arteries.

The artificial blood reservoir 152 may be a pump configured to circulate and/or pressurize the artificial blood therein. The artificial blood may be formed from dyed egg whites, water, or any liquid with similar physiological characteristics to blood. The artificial blood may be any liquid which flows through the artificial blood vessel. The at least one artificial blood vessel 154 may be formed from tubing, such as a small diameter (e.g., 1/64^{th} inch) tube. The tubing may be formed from a plastic or rubber material which allows the liquid artificial blood to cure around it after being frozen.

The artificial blood reservoir 152 is coupled to the first tubular section 230 of the artificial organ frame 220 and the at least one artificial blood vessel 154 is passed through the lumen 231 of the first tubular section 230 and into the cavity 225 of the artificial organ frame 220 adjacent at least one of the windows 223. In some aspects, the at least one artificial blood vessel 154 terminates within the cavity 225 of the artificial organ frame 220 and include closed ends so that the artificial blood is retained in the artificial blood assembly 150 until the at least one artificial blood vessel 154 is cut. In some other aspects, the at least one artificial blood vessel 154 is passed out of the lumen 233 of the second tubular section 232 of the artificial organ frame 220 where the end may be capped during use and opened so that the artificial blood assembly 150 can be drained.

The artificial organ frame 220 is also shown coupled to a conductive wire 235. The conductive wire 235 is utilized in certain aspects to carry energy to a REM pad (not shown) which may be positioned on the support surface 112 (FIG. 3) of the base 110 in applications were energy is applied to the artificial tissue 140 (FIG. 3). In other aspects, a REM pad is applied directly to the artificial tissue 140 (FIG. 4C).

Additionally, or alternatively, an anatomical model of this disclosure may be configured to include artificial tumors to enable performance of surgical tasks related to tumor removal. FIG. 6A illustrates an artificial organ frame 320 including pegs 338 extending from the inner surface 326 of the hollow body 322 and into the cavity 325 of the artificial organ frame 320 adjacent to at least one of the windows 323. The pegs 338 are configured to hold an artificial tumor 170, as seen in FIG. 6B. The artificial tumor 170 includes a hard body 172 defining a channel 173 therethrough. The channel 173 is sized and shaped to receive the peg 338 so that the artificial tumor 170 is retained within the cavity 325 of the artificial organ frame 320.

The anatomical model 100 thus includes a variety of features that may be utilized during use. For example, the base 110 or the artificial tissue 140 may be connected to a REM pad (not shown) for grounding during electrosurgical tasks, an artificial intestine 160 can be attached to the artificial organ frame 120, 220, 320 for performing stapling tasks, an artificial blood assembly 150 can be incorporated into the anatomical model 100 for surgical tasks where bleeding and/or coagulation are desired, and artificial tumors 170 can be positioned in the anatomical model 100 to practice excision.

In a method of making the anatomical model 100, the artificial organ frame 120 is formed to include at least the hollow body 122 and may include the first tubular section 130, the second tubular section 132, the fasteners 134, the flanges 236, and/or the pegs 338. In aspects, the artificial organ frame 120 is formed by 3D printing, however, it should be understood that other techniques, e.g., casting, molding, etc. may be utilized to form the artificial organ frame 120.

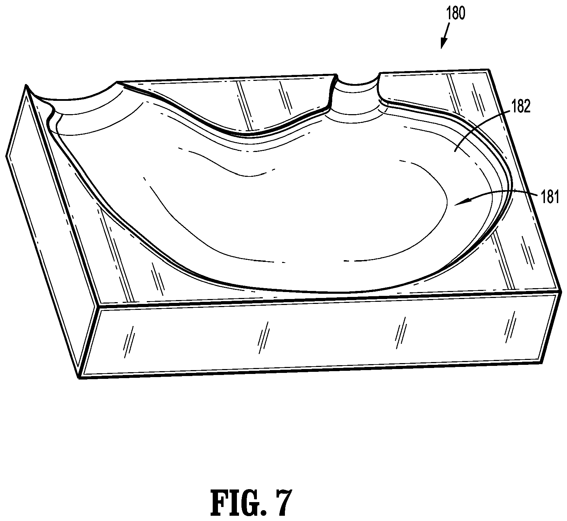

The artificial organ frame 120 is placed in a mold 180 as shown, for example, in FIG. 7. The mold 180 includes a cavity 181 that is substantially the same size and shape as the hollow body 122 of the artificial organ frame 120 so that when the outer surface 124 of the artificial organ frame 120 is placed against the mold cavity surface 182, the artificial organ frame 120 is flush within the cavity 181 of the mold 180 (e.g., the edge 128 of the artificial organ frame 120 is about even with the top of the mold 180).

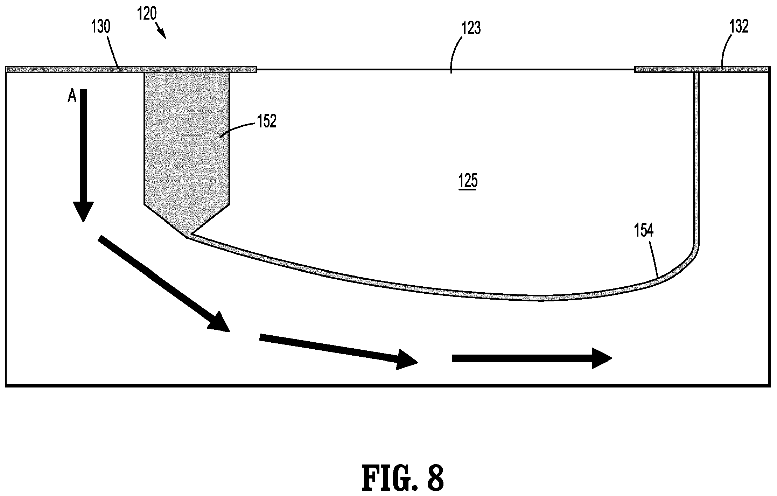

In aspects in which the artificial organ frame 120 includes pegs 338, the artificial tumors 170 are positioned on the pegs 338. In aspects in which the artificial blood assembly 150 is utilized, the at least one artificial blood vessel 154 is positioned within the cavity 125 of the artificial organ frame 120. As shown in FIG. 8, the at least one artificial blood vessel 154 is inserted through the first tubular body 130 of the artificial organ frame 120, fed across the cavity 125 in the direction of arrow "A" such that the at least one artificial blood vessel 154 extends below one of the windows 123, and passed out of the second tubular body 132. The artificial blood assembly 150 and/or the artificial tumors 170 may be placed in the artificial organ frame 120 before or after the artificial organ frame 120 is placed in the mold 180.

A liquid solution of the artificial tissue 140 is prepared. The components of the artificial tissue 140 are heated and mixed at desired concentrations and cooled to room temperature. A dye may be added to the liquid solution of the artificial tissue 140 to adjust the color to resemble tissue. The cooled liquid solution of the artificial tissue 140 is then poured into the artificial organ frame 120, which is disposed within the mold 180. The liquid solution of the artificial tissue 140 is poured until it is flush with the edge 128 of the artificial organ frame 120.

The mold 180, containing the artificial organ frame 120 and the liquid solution of the artificial tissue 140, is placed into a freezer until frozen (e.g., about 12 hours at about ⁻20°C) and then removed from the freezer until thawed (e.g., about 6-8 hours). Once thawed, the artificial organ frame 120 containing the cured artificial tissue 140 is removed from the mold 180. The artificial tissue 140 solidifies around the artificial tumors 170 and the at least one artificial blood vessel 154, and the at least one artificial blood vessel 154 is coupled to the artificial blood reservoir 152. In some aspects, however, the at least one artificial blood vessel 154 acts as a molding component that is removed from the artificial tissue 140 so that the at least one artificial blood vessel 154 is a passageway formed directly within the artificial tissue 140 and the passageway is fluidly coupled to the artificial blood reservoir 152.

In some aspects, the artificial organ frame 120 and the artificial tissue 140 are then placed on the base 110, with or without a REM pad (not shown) attached to the base 110 or the artificial tissue 140, and the anatomical model 100 is ready for use. In some aspects, the anatomical model 100 is placed in the training dome 20 and, in certain aspects, the anatomical model 100 is utilized in the robotic surgical system 1.

After use, minor cuts or lesions (e.g., tears or holes) formed in the artificial tissue 140 may be repaired by pouring the liquid solution of the artificial tissue 140 into the affected area(s) and performing another freeze-thaw cycle to re-set the artificial tissue 140 for another use. The amount of time in the freezer may vary (e.g., about 4-6 hours) depending upon the level of damage to the artificial tissue 140. In some aspects, the artificial tissue 140 can be repaired and re-used a pre-determined number of times (e.g., 5 times, 4 times, or 3 times) before it begins to lose the desired tissue properties.

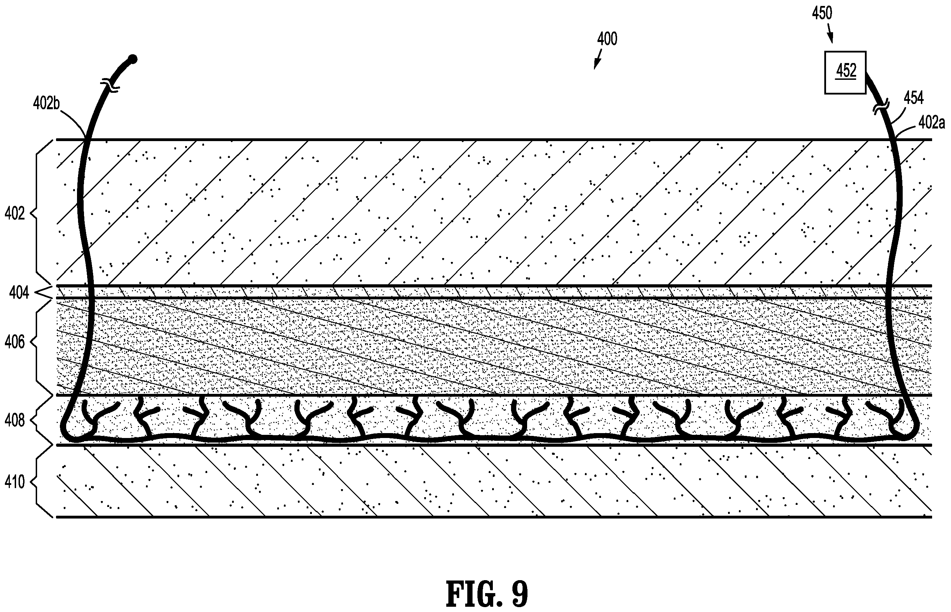

FIG. 9 illustrates an anatomical model 400 in accordance with other aspects of this disclosure. The anatomical model 400 is shaped to anatomically resemble a stomach, like the anatomical model 100. The anatomical model 400, however, is layered with each layer modeled after the layers of the stomach (e.g., proportionally each layer is correspondingly sized to a layer of the stomach and includes the mechanical properties of the respective layer of the stomach). The anatomical model 400 also includes an artificial blood assembly 450 including an artificial blood reservoir 452 containing artificial blood (not explicitly shown) and at least one artificial blood vessel 454 coupled to the artificial blood reservoir 452.

The first layer 402 of the anatomical model 400 mimics the serosa. The first layer 402 is the outermost layer and acts as a shell to protect the more intricate and delicate portions of the stomach. The first layer 402 further includes an input point 402a and an output point 402b for the at least one artificial blood vessel 454 of the artificial blood assembly 450. The second layer 404 mimics the subserosa and is compatible with performing suturing tasks. The third layer 406 mimics the muscle layer and is the toughest layer. The fourth layer 408 mimics the submucosa and includes the at least one artificial blood vessel 454, shown here as a network of artificial blood vessels 454 extending through the fourth layer 408. The fifth layer 410 mimics the mucosa and has a high-water content. The fifth layer 410 may contain a liquid therein to simulate the stomach environment.

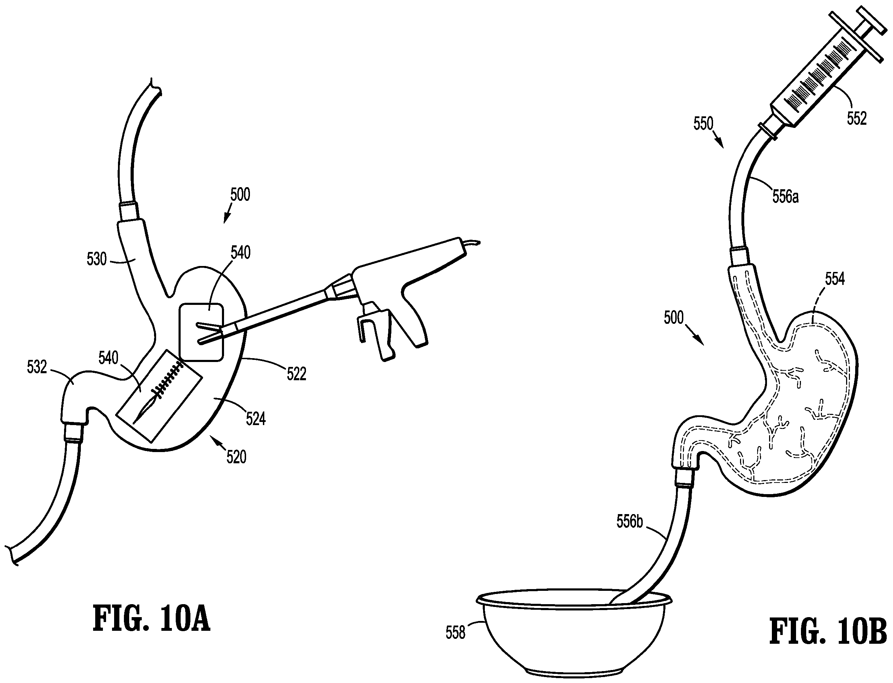

FIG. 10A illustrates an anatomical model 500 in accordance with yet other aspects of this disclosure. The anatomical model 500 includes an artificial organ frame 520 in the shape of a stomach. The artificial organ frame 520 includes a hollow body 522 and first and second tubular sections 530, 532 extending from the hollow body 522. The artificial organ frame 520 may be formed from a flexible material, such as silicone or alginate. The hollow body 522 includes a plurality of artificial tissues 540 that are separate and discrete from each other and extend through the outer surface 524 of the hollow body 522 to which surgical tasks may be performed.

As shown in FIG. 10B, the anatomical model 500 further includes an artificial blood assembly 550 including an artificial blood reservoir 552 containing artificial blood (not explicitly shown) and a network of artificial blood vessels 554 disposed within the artificial organ frame 520. An inlet tube 556a fluidly couples the artificial blood reservoir 552 to the network of artificial blood vessels 554 and an outlet tube 556b extends from the network of artificial blood vessels 554 to the outside environment. The outlet tube 556b can be capped during use so that the artificial blood does not escape the artificial blood assembly 450 until the network of artificial blood vessels 554 is cut, and a collection container 558 (e.g., basin) may be utilized to drain the anatomical model 500 when the bleeding function is not desired.

### EXAMPLES

### Example 1: Trace Matrix for a gastric model

A trace matrix is framed in Table 1 below with user and engineering performance requirements for an anatomical model of a stomach in accordance with aspects of this disclosure.

**TABLE 1: Performance Requirements**

| USER NEEDS | DESIGN INPUT | SPECIFICATIONS |
|---|---|---|
| 1. Ability to train for anastomosis electrosurgery procedures | Cuts when exposed to constant waveform | 30 +/- 10 W |
| | Coagulates when exposed to intermittent waveform | 30 +/- W |
| | Compatible with REM pads | Pass/Fail |
| | Able to be stitched together | Pass/Fail |
| | Handle maximum power | 70 +/- 10 W |
| | Performs leak tests | Pass/Fail |
| 2. Mimic human tissue | Range of durometers | 0 to 70 Shore 00 |
| | Minimum 3 layers (max 5) | Pass/Fail |
| | Correct elasticity | 1.9119 kPa +/- 0.2kPa |
| | Correct anatomical shape | Pass/Fail |
| | Minimum ultimate tensile strength | 0.58 mPa +/- 0.1 MPa |
| | Minimum compressive strength | 15 mPa +/- 10 mPa |
| | Mimics bleeding | Pass/Fail |
| | Correct color | Pale pink |
| 3. Reusable | Resistant to repeated use | 10 repetitions (min.) |
| | Resettable | ≤ 10 minutes |
| | Maintain integrity after reset | Can be cut and coagulated same way consistently through uses |

### Example 2: Preparation of an artificial tissue for the gastric model

A method of preparing an artificial tissue included preparing a first aqueous solution containing 14% 50-42 grade polyvinyl alcohol and a second aqueous solution containing 2.1% phytagel in water, and individually heating the first and second aqueous solutions at about 90°C for about 20-30 minutes. The first and second solutions were then combined together and heated at about 70°C for about 15-20 minutes. The combined solutions were then poured into the mold. The filled mold was put into a freezer for about 15 hours at about ⁻20-⁻25°C. The mold was then removed from the freezer and thawed for about 8 hours at room temperature (e.g., about 20°C).

### Example 3: Preparation of a gastric model

A gastric model was prepared that met the trace matrix requirements provided in Table 1 above. The method included prototyping and forming an artificial organ frame by 3D printing. Tubing was then passed through the cavity of the artificial organ frame. The artificial organ frame and the tubing were then inserted into a mold making sure the edges of the artificial organ frame were flush with the mold. The liquid solution of the artificial tissue of Example 2 was poured into the cavity of the artificial organ frame until flush with the edge of the artificial organ frame.

The mold, with the artificial organ frame and the liquid solution of the artificial tissue was placed into a freezer for about 15 hours. The mold was then removed from freezer and allowed to thaw for about 8 hours. The artificial organ frame and cured artificial tissue was then removed from the mold. The tubing was pulled out of the artificial tissue so that a passageway forming an artificial blood vessel remained in the artificial tissue. The artificial blood reservoir, filled with artificial blood, was fluidly coupled to the passageway.

The gastric model was then placed in a training dome and tested.

### Example 4: Resetting the artificial tissue

Cuts and lesions formed in the artificial tissue after testing were repaired by pouring the liquid solution of the artificial tissue of Example 2 above onto the affected areas of the artificial tissue, placing the gastric model back in freezer for 10 hours, and then allowing the gastric model to thaw for 7 hours.

### Example 5: Gastric model testing

The gastric model of Example 3 above was tested. Safety was analyzed with flammability testing within a specified time of exposure (e.g., 5 seconds), blood coagulation was analyzed to determine that the artificial blood cauterizes within a predetermined time when the artificial blood vessel was cut (e.g., 5 +/- 1 second), electrical properties were analyzed with a REM compatibility test to determine that the resistance of the artificial tissue is compatible with the REM pad (e.g., 1.56 MΩ), and mechanical properties were analyzed with a hardness test within a specified durometer range (e.g., 30-45). The reusability of the artificial tissue was also tested to determine the resistance and hardness of the artificial tissue after each freeze-thaw cycle.

While aspects of the disclosure have been shown in the drawings, it is not intended that the disclosure be limited thereto, as it is intended that the disclosure be as broad in scope as the art will allow and that the specification be read likewise. It is to be understood, therefore, that the disclosure is not limited to the precise aspects described, and that various other changes and modifications may be effected by one skilled in the art without departing from the scope or spirit of the disclosure. Additionally, the elements and features shown and described in connection with certain aspects of the disclosure may be combined with the elements and features of certain other aspects without departing from the scope of the disclosure, and that such modifications and variation are also included within the scope of the disclosure. Therefore, the above description should not be construed as limiting, but merely as exemplifications of aspects of the disclosure. Thus, the scope of the disclosure should be determined by the appended claims and their legal equivalents, rather than by the examples given.

The invention may be described by reference to the following numbered paragraphs:-
1. An anatomical model comprising:
   an artificial organ frame including a hollow body defining a cavity therein and including windows defined through the hollow body, the hollow body shaped like a human organ; and
   an artificial tissue disposed within the cavity of the hollow body and accessible through the windows of the hollow body, the artificial tissue having mechanical and electrical properties that mimic the human organ.
2. The anatomical model according to paragraph 1, wherein the hollow body of the artificial organ frame is shaped like a stomach.
3. The anatomical model according to paragraph 1, wherein the artificial organ frame includes a tubular section extending from the hollow body and defining a lumen therethrough, the lumen in open communication with the cavity of the hollow body.
4. The anatomical model according to paragraph 3, wherein the tubular section includes fasteners extending from a terminal end of the tubular section.
5. The anatomical model according to paragraph 3, further including an artificial intestine connected to the tubular section of the artificial organ frame.
6. The anatomical model according to paragraph 1, wherein the artificial tissue is a hydrogel.
7. The anatomical model according to paragraph 6, wherein the artificial tissue is formed from polyvinyl alcohol and gellan gum.
8. The anatomical model according to paragraph 7, wherein the artificial tissue includes about 10-28% polyvinyl alcohol and about 1-4% gellan gum.
9. The anatomical model according to paragraph 1, further including an artificial blood assembly including an artificial blood reservoir containing artificial blood and at least one artificial blood vessel fluidly coupled to the artificial blood reservoir.
10. The anatomical model according to paragraph 10, wherein the artificial blood reservoir is a pump and the at least one artificial blood vessel is a tube.
11. The anatomical model according to paragraph 9, wherein the at least one artificial blood vessel is disposed within the artificial tissue.
12. The anatomical model according to paragraph 1, further including an artificial tumor having a hard body and a channel extending through the hard body.
13. The anatomical model according to paragraph 12, wherein the artificial organ frame includes a peg extending from an inner surface of the hollow body, and the peg extends through the channel of the artificial tumor.
14. A surgical training and testing system comprising:
   a surgical instrument;
   a training dome including ports, each of the ports configured to allow passage of a portion of the surgical instrument through the port and into a cavity of the training dome; and
   an anatomical model positioned within the cavity of the training dome, the anatomical model including:
      an artificial organ frame including a hollow body defining a cavity therein and including windows defined through the hollow body, the hollow body shaped like a human organ; and
      an artificial tissue disposed within the cavity of the hollow body and accessible through the windows of the hollow body, the artificial tissue having mechanical and electrical properties that mimic the human organ.
15. The surgical training and testing system according to paragraph 14, wherein the surgical instrument is a robotic surgical instrument.
16. A robotic surgical system comprising:
   the surgical training and testing system of paragraph 14; and
   a robotic arm operably coupled to the surgical instrument.
17. The robotic surgical system according to paragraph 16, further including a control device and an operating console, the robotic arm connected to the control device and tele-operable by the operating console.
18. A method of making an anatomical model, the method comprising:
   forming an artificial organ frame including a hollow body in the shape of a human organ, the hollow body defining a cavity therein and including windows defined through the hollow body; and
   forming an artificial tissue having mechanical and electrical properties that mimic the human organ.
19. The method according to paragraph 18, wherein forming the artificial tissue includes pouring a liquid solution of the artificial tissue into the cavity of the hollow body of the artificial organ frame and subjecting the artificial organ frame and the liquid solution of the artificial tissue to a freeze-thaw cycle to cure the artificial tissue within the artificial organ frame.
20. The method according to paragraph 18, further including forming at least one artificial blood vessel within the artificial tissue and fluidly connecting the at least one artificial blood vessel to an artificial blood reservoir containing artificial blood.

## Claims

1. An anatomical model comprising:
an artificial organ frame including a hollow body defining a cavity therein and including windows defined through the hollow body, the hollow body shaped like a human organ; and
an artificial tissue disposed within the cavity of the hollow body and accessible through the windows of the hollow body, the artificial tissue having mechanical and electrical properties that mimic the human organ.

2. The anatomical model according to claim 1, wherein the hollow body of the artificial organ frame is shaped like a stomach.

3. The anatomical model according to claim 1 or 2, wherein the artificial organ frame includes a tubular section extending from the hollow body and defining a lumen therethrough, the lumen in open communication with the cavity of the hollow body.

4. The anatomical model according to claim 3, wherein the tubular section includes fasteners extending from a terminal end of the tubular section.

5. The anatomical model according to claim 3 or 4, further including an artificial intestine connected to the tubular section of the artificial organ frame.

6. The anatomical model according to any preceding claim, wherein the artificial tissue is a hydrogel, preferably wherein the artificial tissue is formed from polyvinyl alcohol and gellan gum, further preferably wherein the artificial tissue includes about 10-28% polyvinyl alcohol and about 1-4% gellan gum.

7. The anatomical model according to any preceding claim, further including an artificial blood assembly including an artificial blood reservoir containing artificial blood and at least one artificial blood vessel fluidly coupled to the artificial blood reservoir.

8. The anatomical model according to claim 7, wherein the artificial blood reservoir is a pump and the at least one artificial blood vessel is a tube.

9. The anatomical model according to claim 7, wherein the at least one artificial blood vessel is disposed within the artificial tissue.

10. The anatomical model according to any preceding claim, further including an artificial tumor having a hard body and a channel extending through the hard body, preferably wherein the artificial organ frame includes a peg extending from an inner surface of the hollow body, and the peg extends through the channel of the artificial tumor.

11. A surgical training and testing system comprising:
a surgical instrument;
a training dome including ports, each of the ports configured to allow passage of a portion of the surgical instrument through the port and into a cavity of the training dome; and
an anatomical model as claimed in any preceding claim positioned within the cavity of the training dome, the anatomical model including:
an artificial organ frame including a hollow body defining a cavity therein and including windows defined through the hollow body, the hollow body shaped like a human organ; and
an artificial tissue disposed within the cavity of the hollow body and accessible through the windows of the hollow body, the artificial tissue having mechanical and electrical properties that mimic the human organ.

12. The surgical training and testing system according to claim 11, wherein the surgical instrument is a robotic surgical instrument.

13. A robotic surgical system comprising:
the surgical training and testing system of claim 11 or 12; and
a robotic arm operably coupled to the surgical instrument.

14. The robotic surgical system according to claim 13, further including a control device and an operating console, the robotic arm connected to the control device and tele-operable by the operating console.

15. A method of making an anatomical model, the method comprising:
forming an artificial organ frame including a hollow body in the shape of a human organ, the hollow body defining a cavity therein and including windows defined through the hollow body; and
forming an artificial tissue having mechanical and electrical properties that mimic the human organ, preferably wherein forming the artificial tissue includes pouring a liquid solution of the artificial tissue into the cavity of the hollow body of the artificial organ frame and subjecting the artificial organ frame and the liquid solution of the artificial tissue to a freeze-thaw cycle to cure the artificial tissue within the artificial organ frame and/or, further including forming at least one artificial blood vessel within the artificial tissue and fluidly connecting the at least one artificial blood vessel to an artificial blood reservoir containing artificial blood.
